# NEUE EUROPÄISCHE PATENTSCHRIFT

(11) **EP 0 469 383 B2**
(45) Veröffentlichungstag und Bekanntmachung des Hinweises auf die Entscheidung über den Einspruch: **16.06.1999**
(45) Hinweis auf die Patenterteilung: 21.09.1994
(21) Anmeldenummer: 91111881.8
(22) Anmeldetag: 16.07.1991
(51) Int. Cl.: G02B 6/44

(54) **Verfahren zur Herstellung eines eine zweischichtige Schutzhülle und mindestens einen lose im Innern der Schutzhülle angeordneten Lichtwellenleiter aufweisenden optischen Übertragungselements**
Method of producing an optical transmission element comprising at least one optical waveguide loosely housed in a two-layer protection sheathing
Procédé de fabrication d'un élément de transmission optique comprenant au moins un guide optique mobile logé dans un tube de protection constitué de deux gaines

(30) Priorität: 01.08.1990 DE 4024448
(43) Veröffentlichungstag der Anmeldung: 05.02.1992
(73) Patentinhaber: SIEMENS AKTIENGESELLSCHAFT, 80333 München (DE)
(72) Erfinder: Oestreich, Ulrich, Dipl.-Ing., W-8000 München 70 (DE); Reissenweber, Wilfried, W-8633 Rödental (DE)

(56) Entgegenhaltungen:
- EP-A- 0 151 743
- EP-A- 0 178 373
- EP-A- 0 198 442
- DE-A- 3 337 863
- DE-B- 2 513 722
- Kunststoffe 68 (1978) 12, pp. 819

## Beschreibung

Die Erfindung betrifft ein Verfahren zur Herstellung eines optischen Ubertragungselements, welches eine zweischichtige Schutzhülle und mindestens einen lose im Innern der Schutzhülle angeordneten Lichtwellenleiter aufweist.

Die EP 0 151 743 A2 beschreibt ein optisches Übertragungselement, dessen den Lichtwellenleiter aufnehmende Schutzhülle aus zwei Schichten besteht. Die innere Schicht der Hülle ist aus Polycarbonat, die äußere Schicht der Hülle aus einem Material auf Polyesterbasis gefertigt. Während der Herstellung der Schutzhülle wird das Material der äußeren Schicht auf die bereits erhärtete und mittels eines Extruders erzeugte innere Schicht aus Polycarbonat aufgebracht.

Der Mantel des aus der DE 25 13 722 bekannten optischen Kabels ist ebenfalls geschichtet aufgebaut, wobei die innere Mantelschicht aus Polystyrol oder einem Fluorpolymer und die äußere Mantelschicht beispielsweise aus Polypropylen oder Polyäthylen bestehen können.

Bei der Herstellung der in der EP 0 178 373 A1 beschriebenen Schutzhülle für einen Lichtwellenleiter bedient man sich zweier Extruder, wobei der zuerst vom Lichtwellenleiter durchlaufene Extruder die aus Polycarbonat bestehende Innenschicht der Hülle, der in der Fertigungslinie dahinter angeordnete Extruder die beispielsweise aus einem Polyester bestehende Außenschicht der Hülle erzeugt. Vor dem Aufbringen der Außenschicht wird das Polycarbonat durch die mittels einer Nadel zugeführte Füllmasse auf etwa 150 °C abgekühlt und dadurch verfestigt.

Aufgabe der Erfindung ist die Schaffung eines Verfahrens zur Herstellung eines optischen Übertragungselements der eingangs genannten Art, das in der aus einem Polycarbonat bestehenden inneren Hüllenschicht möglichst wenige "eingefrorene" mechanische Spannungen erzeugt.

Durch die bei der Kristallisation freiwerdende Wärme werden eingefrorene Spannungen weitgehend vermieden, die sonst bei der Abkühlung im Polycarbonatmaterial der Innenschicht entstehen können. Die Kristallisationswärme des Materials der Außenschicht verhindert die Ausbildung eines Temperaturmaximums im Inneren der Innenschicht. Die Kristallisation der Außenschicht liegt deshalb mindestens bei Werten von 70 %, um die notwendige Wärme für den Außenbereich der Innenschicht bereitzustellen. Besonders zweckmäßig sind Kristallisationswerte der Außenschicht zwischen 70 % und 90 %.

Innenschichten aus einem Polycarbonat, das keine nennenswerte Kristallisation, aber einen hohen E-Modul auch bei höheren Temperaturen aufweist, sind spannungsrißanfällig. Bei dauernden Spannungen, die ca. 25 % der Kurzzeitfestigkeit überschreiten, können sich Anriße bilden, die bei Belastungsimpulsen zum Brechen führen können. Diese Spannungen sind z.T. von außen mechanisch erzeugt, also z.B. durch Verseil-Biegungen. Ein weiterer Spannungsanteil rührt vor allem von der Abkühlung her, die oft zu schnell (insbesondere bei hohen Durchlaufgeschwindigkeiten) erfolgt. Durch verspätete Abkühlung noch weichen Materials in der Mitte der Polycarbonat-Schicht, d.h. zwischen zwei harten, bereits erstarrten Außenschalen kommt es zu unerwünschten Zusatzspannungen. Diese können ebenso groß sein oder größer als die unvermeidlichen mechanisch erzeugten Spannungen bei der Verseilung oder Verlegung. Die Erfindung bietet die Möglichkeit, die Außenschicht so zu wählen, daß sie möglichst abkühlungsdämpfend (d.h. verlangsamend) auf die Abkühlung der Innenschicht wirkt. Da die Kristallisationstemperatur des Materials der Außenschicht unter der Erweicherungstemperatur des für die Innenschicht verwendeten Polycarbonats liegt, entsteht während der Kristallisation im Bereich der Außenschicht ständig Wärme (exorthermer Vorgang), die sicherstellt, daß im Trennschicht-Bereich zwischen Außenschicht und Innenschicht die Innenschicht auf einer erhöhten Temperatur gehalten wird. Dadurch ist vermieden, daß im Bereich der Trennschicht es zu einem zu schnellem Absinken der Temperatur der Innenschicht und damit des Polycarbonats kommt. Wenn dies nicht gewährleistet ist, d.h. wenn ein Fall auftritt, bei dem von außen her die Abkühlung sehr schnell nach innen fortschreitet, dann kommt es im Bereich der Trennschicht (also im Außenbereich des Polycarbonats) zu einer Erhärtung, wobei gleichzeitig durch den Abfluß von Wärme beim Polycarbonat nach innen (in Richtung auf die Füllmasse) ebenfalls eine Abkühlung und damit eine Erhärtung eintritt. In diesem Fall liegt zwischen zwei bereits erhärterten Außenschalen des Polycarbonats ein Zwischenbereich vor, der noch nicht ausgehärtet ist und in dem sich Restspannungen aufbauen, weil eine Relaxierung nicht mehr möglich ist. Diese Restspannungen können zu den eingangs genannten Beeinträchtigungen des mechanischen Verhaltens der Schutzhüllen führen.

Für die Außenschicht wird zweckmäßig ein Polyolefine-Material verwendet. Dies hat allgemein den Vorteil, daß Kristallisationsgrad und -Wärme besonders groß sind.

Im einzelnen ist insbesondere der Einsatz eines Polypro pylen-Materials für die Außenschicht möglich. Dieses hat den Vorteil, daß die Verarbeitungstemperatur dieser Schicht der Innenschicht angepaßt ist.

Besonders zweckmäßig ist es jedoch, wenn für die Außenschicht Polyäthylen (PE) verwendet wird, weil dieses Material preiswert ist und eine gute Polsterung bei gleichzeitiger hoher Elastizität für die Außenschicht ergibt. Etwaige äußere Druckkräfte, z.B. bei der Verseilung werden gut verteilt und vor allem die Knickstabilität und die Flexibilität können verbessert werden.

Besonders zweckmäßig ist die Verwendung von hochmolekularen Polyolefin bzw. Polyäthylen, d.h. einem Material mit einem Molgewicht etwa zwischen 60000 und 150000. Derartig z.B. hochmolekulares PE hat insbesondere folgende Vorteile:
a) Die Wärmeleitfähigkeit ist bei Temperaturen oberhalb des Erweichungsbereiches - entsprechend der verschwundenen Kristallisation und der geringen Dichte - besonders gering und liegt niedriger als die eines Polyesters. Während z.B. PBTD nur etwa 40 % Kristallisation bei Raumtemperatur hat, ist dieser Wert bei einem hochgeeigneten hochmolekularen Polyäthylen etwa doppelt so groß. Ein höheres Maß an Kristallisation, also etwa ein Bereich von etwa 80% bei einem hochmolekularen Polyäthylen hat natürlich zur Folge, bei der Kristallisation selbst ein entsprechend höherer Anteil an Kristallisations-Wärme frei wird und also auf diese Art und Weise eine Erhärtung der Polycarbonatschicht im Außenbereich (d.h. in der Nähe der Trennschicht) mit Sicherheit vermieden werden kann und zwar auch dann, wenn mit hoher Durchlaufgeschwindigkeiten und/oder starker Kühlung gearbeitet wird.
b) Der Aufbau der Kristallisation bei der Abkühlung setzt ein größeres Maß an Wärme frei.

Daher wird durch Polyäthylen als Deckschicht die in die Innenschicht von außen her vordringende Abkühlungswelle besonders stark abgeflacht.

Die Herstellung der Innenschicht und der Außenschicht im Koextrusionsverfahren hat den Vorteil, daß beide Schichten in einem Arbeitsgang gemeinsam hergestellt werden können. Auch ist nur eine einzige Abkühlungseinrichtung erforderlich, wobei diese Abkühlung an sich relativ schnell durchgeführt werden kann (hohe Durchlaufgeschwindigkeiten bei gleichzeitiger starker Kühlung), weil durch die bei der Kristallisation der Außenschicht freigesetzte Wärme eine Verzögerung der Abkühlung bei der Innenschicht im Trennschichtbereich gewährleistet ist und damit erreicht wird, daß der Erhärtungsprozeß des Polycarbonat-Materials der Innenschicht fortschreitend von innen nach außen erfolgt. Es ist also bei der Erfindung vermieden, daß es im Außenbereich der Innenschicht, (d.h. im Bereich der Trennschicht) zu einer vorzeitigen Erhärtung des Polycarbonat-Materials kommt, bevor die gesamte Wandstärke des Polycarbonats von innen nach außen fortlaufend erhärtet ist.

Weiterbildungen der Erfindung sind in Unteransprüchen wiedergegeben.

Die Erfindung wird nachfolgend anhand von Zeichnungen näher erläutert.

Es zeigen
- Fig. 1: den Aufbau eines optischen Übertragungselementes im Querschnitt,
- Fig. 2: eine Einrichtung zur Durchführung des erfindungsgemäßen Verfahrens in schematischer Darstellung,
- Fig. 3: den Temperaturverlauf bei Anwendung der Erfindung in einem Querschnittsbereich unmittelbar am Ausgang des Extruders,
- Fig. 4: den Temperaturverlauf bei Anwendung der Erfindung in einem Querschnittsbereich nach Durchlaufen eines Teils der Kühlstrecke,
- Fig. 5: den Temperaturverlauf bei Anwendung der Erfindung in einem Querschnittsbereich nach Abschluß des Kühlvorganges und
- Fig. 6: den Temperaturverlauf ohne Anwendung der Erfindung.

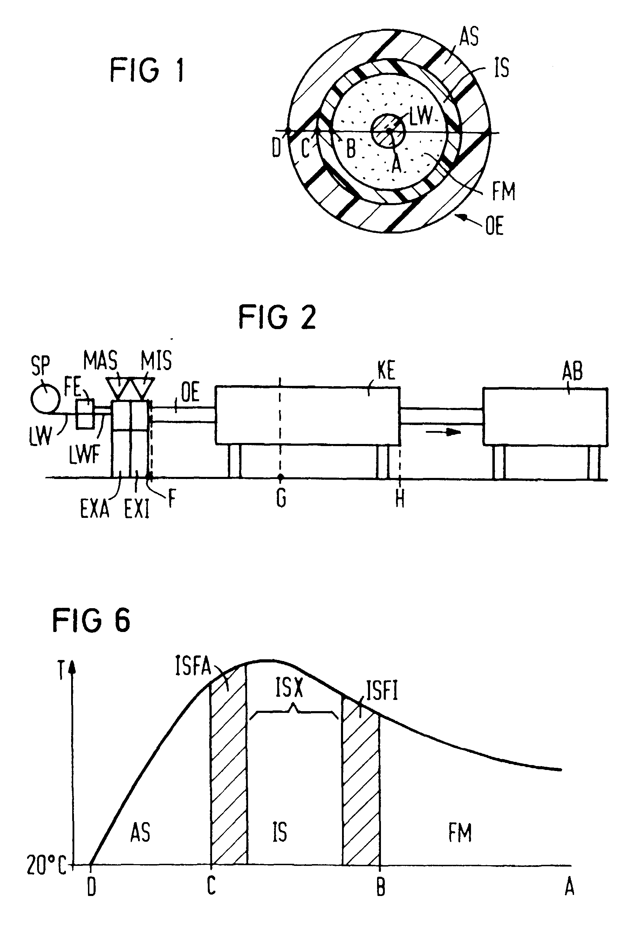

In Fig. 1 ist im Inneren eines optischen Übertragungselementes OE (bevorzugt einer Lichtwellenleiterader, welche später zusammen mit anderen gleichartigen Elementen zu einem Bündel verseilt wird) ein Lichtwellenleiter LW vorgesehen, der in eine Füllmasse FM eingebettet ist. Es können im Inneren auch mehrere Lichtwellenleiter, ggf. verseilt oder zu Bändchen zusammen gefaßt vorhanden sein. Diese Füllmasse FM besteht im wesentlichen aus thixotropierten, ölhaltigen Bestandtteilen. Das optische Übertragungselement OE weist eine zweilagige Schutzhülle auf, wobei die Innenschicht IS aus einem Polycarbonat (PC) hergestellt ist. Besonders zweckmäßig ist die Verwendung hochmolekularer Polycarbonate, d.h. solcher, deren Molgewichte über 30000 liegen. Hochmolekulare Polycarbonate haben den Vorteil, weniger spannungsrißanfällig zu sein.

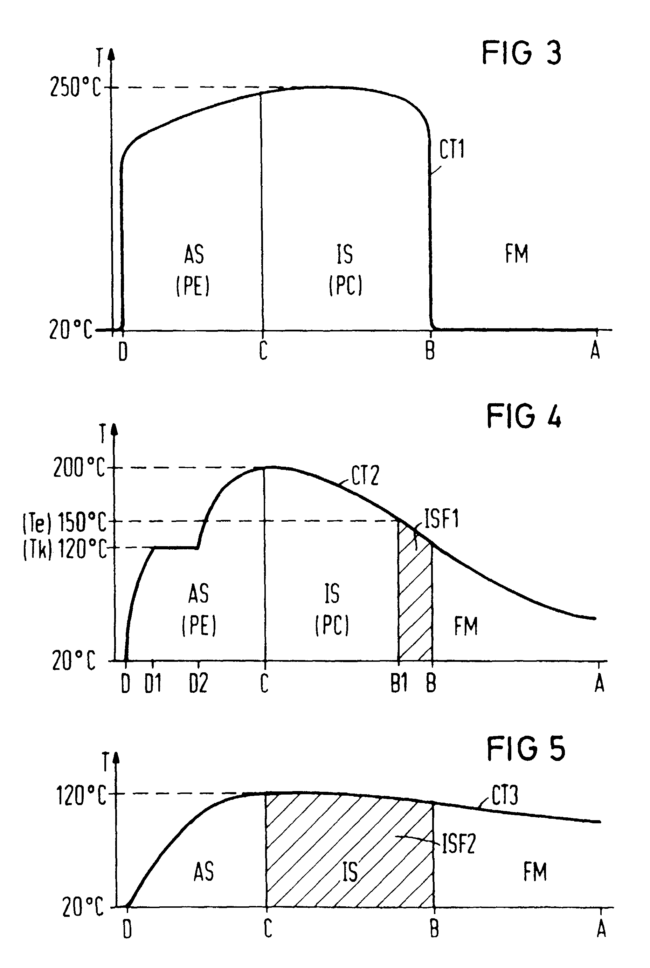

Durch die Verwendung von Polycarbonat für die Innenschicht ist diese besonders hart sowie zug- und querumformungsfest und zur Vermeidung von Nachteilen wird außen eine weiche und elastisch bleibende Außenschicht AS aufgebracht, die eine Kristallisationstemperatur aufweist, welche unter der Erweichungstemperatur des für die Innenschicht IS verwendeten Polycarbonats liegt. Näheres hierzu wird anhand der Figuren 3 mit 6 erläutert.

Die Außenschicht AS besteht zweckmäßig aus einem Polyolefine-Material, wobei der Einsatz von Polypropylen und bevorzugt Polyäthylen möglich ist.

Bei Verwendung von Polyäthylen ist es vorteilhaft, lineare Polyäthylene mit niedriger Dichte (LLDPE) zu verwenden. Lineare Polyäthylene mit niedriger Dichte haben einen Bereich der Dichte zwischen 0,92 und 0,93.

Weiterhin ist vielfach auch die Verwendung linearer Polyäthylene mit mittlerer Dichte (LMDPE) mit Vorteil möglich, wobei die Dichtewerte hier etwa zwischen 0,93 und 0,94 liegen. Beide Polyäthylenarten (LLDPE und LMDPE) haben eine besonders hohe Kristallisation und Dehnung bei einem mäßigen E-Modul. Die E-Modulwerte liegen etwa zwischen 300 und 500 N/mm². Die RT-Kristallisation liegt bei LLDPE zwischen 70 % und 80 %. Die entsprechenden Werte bei LMDPE betragen 80 % und 90 %.

Eine Außenschicht AS aus Polyolefine, wie Polyäthylen ist auch bei tiefen Temperaturen flexibel, kann nicht hydrolisiert werden, ergibt mit der Polycarbonatschicht (IS) eine völlig knickstabile Schutzhülle. Die Außenschicht AS ist auch gegen übliche Seelenfüllmassen ausreichend quellresistent.

Bevorzugte Wandstärkenverhältnisse für die Innenschicht IS und die Außenschicht AS liegen bei etwa 1 : 1, d.h. die äußere Deckschicht AS umfaßt volumenmäßig etwa 60 % der Aderhülle gebildet aus AS + IS. Allgemein ausgedrückt sollte die Außenschicht AS ein größeres Volumen aufweisen als die Innenschicht, wobei zweckmäßige Bereiche der Volumina von IS und AS liegen zwischen IS/AS = 1/2 bis 1/1. Die Festigkeit und der E-Modul der Innenschicht IS reichen aus, um die notwendige Temperaturstabilität des optischen Übertragungselementes OE zu sichern, um einen ausreichenden Widerstand gegenüber Längsund Querkräften zu gewährleisten. Die äußere Schicht AS aus einem Polyolefine, insbesondere Polyäthylen, wirkt als Polster und gleichzeitig Schutz der inneren Schicht IS aus Polycarbonat. Die Materialkosten können niedrig gehalten werden, insbesondere wenn Polyäthylen zum Einsatz kommt, weil dieses ein besonders billiger und leicht zu verarbeitender Werkstoff ist. Die Einfärbbarkeit der aus einem Polyalifat, insbesondere Polyäthylen bestehenden Außenschicht ist normal.

Für die Wandstärken der Außenschicht AS und der Innenschicht IS werden zweckmäßig etwa Werte zwischen 0,5 mm und 0,1 mm verwendet.

In Fig. 2 ist eine Fertigungseinrichtung zur Durchführung des erfindungsgemäßen Verfahrens gezeichnet, wobei ein Lichtwellenleiter LW von einer Vorratsspule SP abgezogen wird. Mittels einer Fülleinrichtung FE wird die Füllmasse FM aufgebracht, so daß ein außen mit Füllmasse beschichteter Lichtwellenleiter LWF vorliegt. Dieser läuft in einen Doppel-Extruder ein. Dem Extruder EXA wird eine erste Masse MAS zur Herstellung der Außenschicht AS und dem Extruder EXI eine zweite Masse MIS zur Herstellung der Innenschicht IS des optischen Übertragungselementes OE nach Fig. 1 zugeführt. Beide Extruder EXA und EXI sind zweckmäßig in bekannter Weise in V-Form angeordnet und liefern aus gemeinsamen Ausgang das Element OE. Die Durchführung der Extrusion erfolgt somit im sogenannten Koextrusions-Verfahren, d.h. die beiden Schichten IS und AS werden gleichzeitig erzeugt und am Ausgang liegt bereits die fertige Doppelschicht der Außenhülle vor, so daß dort das optische Übertragungselement OE als Ganzes bereits vorhanden ist. Die Füllmasse FM beginnt die Innenschicht vom Moment der ersten Berührung an zu kühlen. Dieses optische Übertragungselement OE wird anschließend in eine Kühleinrichtung KE eingeführt, die entsprechend lang bemessen ist, so daß am Ausgang der Kühleinrichtung also etwa im Punkt H das optische Übertragungselement OE nahezu auf Raumtemperatur abgekühlt ist. Anschließend erfolgt eine Ablage, z.B. auf einem Teller AB, wobei das optische Übertragungselement OE (d.h. die Lichtwellenleiterader) mit einem entsprechend großen Durchmesser von mehr als 1 Meter in Schleifen abgelegt wird.

In Fig. 3 ist die Temperaturverteilungskurve CT1 in einem Teilquerschnitt eines optischen Übertragungselementes nach Fig. 1 dargestellt. Dabei bezeichnet der Punkt A, wie aus Fig. 1 ersichtlich ist, ist die Lage der Längsachse des optischen Übertragungselementes OE, während der Punkt B den Übergang von der Füllmasse FM zur Innenschicht IS bezeichnet. Die Trennschicht zwischen Innenschicht IS und Außenschicht AS ist mit C bezeichnet und der Außenhaut der Außenschicht AS entspricht dem Punkt D. Geht man davon aus, daß die Füllmasse der Fülleinrichtung FE in Fig. 2 etwa mit 20° C (d.h. Raumtemperatur) zugeführt wird, so ist am Ausgang des Extruders EX, also etwa im Bereich der Ebene F in Fig. 2 eine Temperaturverteilung vorhanden, wie sie in Fig. 3 dargestellt ist. Von A bis B liegt die Temperatur der Füllmasse etwa bei 20 ° C (Raumtemperatur), während die Innenschicht IS (bei einer Schmelztemperatur von etwa 210° C des Polycarbonat-Materials PC) eine Ausgangstemperatur in der Größenordnung von etwa 250° C aufweist.

Nachfolgend wird zur Verdeutlichung des Beispiels davon ausgegangen, daß für die Außenschicht AS Polyäthylen verwendet wird; wie jedoch eingangs erwähnt können dafür auch andere Arten von hochkristallisierenden Materialien mit entsprechender Kristallisationstemperatur verwendet werden. Das Polyäthylen hat einen Schmelzpunkt etwa in der Größenordnung von 120° C, wobei jedoch infolge der Koextrusion auch das Polyäthylen der Außenschicht AS zu Anfang etwa in der Nähe der Temperatur des Polycarbonats der Innenschicht IS liegt. Nach außen hin tritt ein steiler Abfall auf die Raumtemperatur im Punkt D auf.

Die Temperatur T, bei der das Polycarbonat der Innenschicht IS sich zu verfestigen beginnt, liegt bei etwa 200° C und da diese Temperatur von keiner der Schichten AS und IS in Fig. 3 erreicht wird, liegt am Ausgang des Extruders die gesamte Außenhülle AS + IS im weichflüssigen Zustand vor.

Nach einigen Metern, z.B. nach 3 m innerhalb der Kühleinrichtung KE (bezeichnet durch die Ebene G in Fig. 2) ist ein Teil der Wärme der Innenschicht IS an die Füllmasse FM abgegeben worden, so daß dort im Punkt A die Temperatur etwa auf den Wert 50° C angestiegen ist. Durch die Wärmeabgabe in Richtung zur Füllmasse FM ist auch die Erweichungstemperatur TE des Polycarbonats der Innenschicht IS unterschritten, so daß es in einem Bereich der Innenhaut der Innenschicht IS zwischen den Punkten B und B1 zu einer Erhärtung des Polycarbonats-Materials (im Temperaturbereich von 120° bis 150° C) gekommen ist, was durch die Schraffierung ISF1 angedeutet ist. Im Bereich der Trennschicht (bei C) ist die Temperatur nur auf etwa 200° C abgesunken und innerhalb der Außenschicht AS ist infolge des Einflusses der von außen erfolgenden Kühlung durch die Kühleinrichtung KE ein relativ steiler Temperaturabfall eingetreten. Dabei ist ausgehend vom Punkt D ein steiler Anstieg der Temperaturkurve zu verzeichnen, wobei zwischen den Punkten D1 und D2 die Temperaturkurve CT2 einen flachen Verlauf zeigt. Dies rührt daher, daß bei etwa 120° C die Kristallisation des Polyäthylens der Außenschicht AS erfolgt, was einen exothermen Vorgang darstellt, der die Temperatur in diesem Bereich festhält. Da die Kristallisationswärme ein schnelles Fortschreiten der Kühlfront verhindert, kommt es nach dem waagerechten Teil (d.h. beim Punkt D2) zu einem Festhalten der Temperatur auf einen Wert von etwa 120° C beim Polyäthylen der Außenschicht AS. Auf diese Weise, nämlich durch die Kristallisationswärme der Außenschicht AS wird soviel Energie bereit gestellt, daß im Trennbereich C ein hoher Temperaturwert beibehalten wird und zwar so hoch, daß es hier erst zuletzt zu einer Verfestigung, d.h. zu einem Unterschreiten der Erweichungstemperatur Te des Polycarbonats PC der Innenschicht IS kommt. Dieser hohe Temperaturwert im Bereich der Trennschicht C zwischen Innenschicht IS und Außenschicht AS wird während des Abkühlungsverfahrens im Bereich der Kühlstrecke KE nach Fig. 2 möglichst lang beibehalten, so daß sich die Verfestigung der Innenschicht IS allmählich vom Punkt B in Richtung zum Punkt C fortlaufend fortsetzt und dadurch eine fortschreitende gleichmäßige Erhärtung der Innenschicht IS erhalten wird, welche praktisch keine oder nur sehr geringe eingefrorene Restspannungen ergibt. Diese Restspannungen sind deswegen unerwünscht, weil sie zu einer Beeinträchtigung des mechanischen Verhaltens der Innenschicht IS führen. Es ist somit der vorteilhafte Einfluß des erfindungsgemäßen Vorgehens in einfacher Weise dadurch feststellbar, daß geprüft wurde, ob die günstigen mechanischen Eigenschaften des Polycarbonat-Materials der Innenschicht IS erhalten geblieben sind oder ob schlechtere Werte auftreten.

Die Kristallisationstemperatur Tk der Außenschicht AS sollte unter oder höchstens etwa bei der Erweichungstemperatur Te des Polycarbonats liegen.

Ohne die Temperaturstufe im Bereich D1/D2 (durch der Kristallisationswärme) würde sich ein Temperaturverlauf ergeben, der ein Temperaturmaximum in der PC-Schicht IS erzeugt (insbesondere, wenn die Außenschicht AS dünn ist). Näheres hierzu ergibt sich aus Fig. 6.

Fig. 5 zeigt die Temperaturverteilung CT3 nach Abschluß des Kühlvorganges, d.h. in der Ebene, die in Fig. 2 mit H bezeichnet ist. Die Innentemperatur ist im Bereich der Füllmasse FM auf etwa 80° C angestiegen, während im Bereich der Trennschicht C etwa eine Temperatur von 120° C herrscht, also die Erweichungstemperatur Te von 140° C gerade etwas unterschritten ist. Der Punkt B1 nach Fig. 4, welcher die äußere Grenze der Erhärtung bezeichnet ist, also allmählich zum Punkt C gewandert und fällt in Fig. 5 praktisch mit diesem zusammen. Deshalb ist der gesamte Bereich zwischen B und C in Fig. 5 schraffiert dargestellt und der erhärtete Bereich ISF2 erstreckt sich über die gesamte Wandstärke der Innenschicht IS. Diese allmähliche Ausbreitung des Härtungsbereichs von innen (Punkt B) nach außen (zur Trennschicht C) liefert die erfindungsgemäße weitgehend spannungsfreie Aushärtung des Polycarbonat-Materials der Innenschicht IS.

Fig. 6 verdeutlicht in schematischer Weise in der Darstellungsart der Figuren 3 mit 5 den Verlauf der Abkühlung, wenn für die Außenschicht AS kein oder ein nicht ausreichend kristallisierendes Material verwendet wird. Beispielsweise kann die Darstellung nach Fig. 6 für die Verwendung eines nicht oder nur wenig kristallisierenden Polyester-Materials für die Außenschicht AS gelten. Bei der Innenschicht IS hatsich durch die rasche Abkühlung derAußenschicht AS (die durch keine bei der Kristallisation entstehende Kristallisationswärme gebremst ist) ein verfestigter Bereich ISFA im Anschluß an die Trennschicht C gebildet. Ebenso ist im Bereich der Innenhaut eine weitere verfestigte Trennschicht ISFI entstanden und zwar analog zu der Schicht ISF1 in Fig. 4. Zwischen diesen beiden erhärterten äußeren und inneren Trennschalen ISFA und ISFI liegt ein Bereich ISX, in dem das während der weiteren Abkühlung verminderte Volumen nicht mehr nachfließen kann, weil die Außenschale ISFA und die Innenschale ISFI ein Zuwandern von Material verhindern. Dieses im Bereich ISX entstehende Fehlvolumen führt zu hohen Zugspannungen, die eingefroren werden und das Verhalten der an sich mechanisch hochwertigen Innenschicht IS aus Polycarbonat-Material beeinträchtigen.

## Patentansprüche

1. Verfahren zur Herstellung eines eine zweischichtige Schutzhülle und mindestens einen lose im Innern der Schutzhülle angeordneten Lichtwellenleiter (LW) aufweisenden optischen Übertragungselements (OE) durch Ausführen der folgenden Schritte:
a) Erzeugen einer aus einem Polycarbonat bestehenden Innenschicht (IS) und einer als nicht spannungsrißempfindliche Schutzschicht ausgebildeten Außenschicht (AS) durch Anwendung des Verfahrens der Koextrusion, wobei der Kristallisationsgrad des die Außenschicht (AS) bildenden Materials mindestens 70 % beträgt und seine Kristallisationstemperatur unterhalb der Erweichungstemperatur des Polycarbonats liegt;
b) Abkühlen der Schutzhülle und des darin angeordneten Lichtwellenleiters (LW) derart, daß die bei der Kristallisation des Materials der Außenschicht (AS) freigesetzte Wärme die von außen nach innen fortschreitende Abkühlung der Schutzhülle verzögert, die aus Polycarbonat bestehende Innenschicht (IS) im wesentlichen von innen nach außen fortschreitend erhärtet und in ihr somit möglichst wenig Spannungen erzeugt und eingefroren werden.

2. Verfahren nach Anspruch 1,
**dadurch gekennzeichnet,**
daß die Außenschicht (AS) aus einem Polyolefine-Material gefertigt wird.

3. Verfahren nach Anspruch 2,
**dadurch gekennzeichnet,**
daß die Außenschicht (AS) aus Polypropylen gefertigt wird.

4. Verfahren nach Anspruch 2,
**dadurch gekennzeichnet,**
daß die Außenschicht (AS) aus Polyäthylen gefertigt wird.

5. Verfahren nach Anspruch 4,
**dadurch gekennzeichnet,**
daß die Außenschicht (AS) aus einem linearen Polyäthylen mit niedriger Dichte, d.h. einem LLDPE gefertigt wird.

6. Verfahren nach Anspruch 4,
**dadurch gekennzeichnet,**
daß die Außenschicht (AS) aus einem linearen Polyäthylen mittlerer Dichte, d.h. einem LMDPE gefertigt wird.

7. Verfahren nach einem der vorhergehenden Ansprüche,
**dadurch gekennzeichnet,**
daß die Wandstärken der beiden Schichten (AS, IS) der Schutzhülle etwa im Verhältnis 1:1 gewählt werden.

8. Verfahren nach einem der vorhergehenden Ansprüche,
**dadurch gekennzeichnet,**
daß die Außenschicht (AS) aus einem hochmolekularem Polyolefine-Material mit einem im Bereich zwischen 60000 und 150000 liegenden Molekulargewicht gefertigt wird.

9. Verfahren nach einem der vorhergehenden Ansprüche,
**dadurch gekennzeichnet,**
daß der Kristallisationsgrad des Materials der Außenschicht (AS) zwischen 70 % und 90 % liegt.

## Claims

1. Process for the production of an optical transmission element (OE) having a two-layer protective sheath and at least one optical waveguide (LW) which is arranged loosely in the interior of the protective sheath, which comprises carrying out the following steps:
a) production of a polycarbonate inner layer (IS) and an outer layer (AS) in the form of a protective layer which is not sensitive to stress cracking, by using the process of coextrusion, where the degree of crystallization of the material forming the outer layer (AS) is at least 70% and its crystallization temperature is below the softening point of the polycarbonate;
b) cooling the protective sheath and the optical waveguide (LW) arranged therein in such a way that the heat liberated during crystallization of the material of the outer layer (AS) retards the cooling of the protective sheath progressing from the outside inwards, the polycarbonate inner layer (IS) essentially cures from the inside outwards, and the fewest possible stresses are thus generated and frozen therein.

2. Process according to Claim 1, characterized in that the outer layer (AS) is made from a polyolefin material.

3. Process according to Claim 2, characterized in that the outer layer (AS) is made from polypropylene.

4. Process according to Claim 2, characterized in that the outer layer (AS) is made from polyethylene.

5. Process according to Claim 4, characterized in that the outer layer (AS) is made from a linear low density polyethylene, that is to say an LLDPE.

6. Process according to Claim 4, characterized in that the outer layer (AS) is made from a linear medium density polyethylene, that is to say an LMDPE.

7. Process according to one of the preceding claims, characterized in that the wall thicknesses of the two layers (AS, IS) of the protective sheath are chosen approximately in the ratio of 1:1.

8. Process according to one of the preceding claims, characterized in that the outer layer (AS) is made from a high-molecular-weight polyolefin material, with a molecular weight in the region of between 60,000 and 150,000.

9. Process according to one of the preceding claims, characterized in that the degree of crystallization of the material of the outer layer (AS) is between 70% and 90%.

## Revendications

1. Procédé de fabrication d'un élément de transmission optique (OE) comportant une gaine de protection à deux couches et au moins un guide d'ondes lumineuses (LW) disposé de façon lâche à l'intérieur de la gaine de protection en effectuant les stades suivants :
a) production d'une couche intérieure (IS) en polycarbonate et d'une couche extérieure (AS) en tant que couche de protection insensible à la fissuration sous contrainte par utilisation du procédé de la coextrusion, le degré de cristallisation du matériau formant la couche extérieure (AS) étant d'au moins 70 % et sa température de cristallisation étant inférieure à la température de ramollissement du polycarbonate ;
b) refroidissement de la gaine de protection et du guide d'ondes lumineuses (LW) qui s'y trouve de façon à ce que la chaleur dégagée lors de la cristallisation du matériau de la couche extérieure (AS) ralentisse le refroidissement se propageant de l'extérieur vers l'intérieur de la gaine de protection, que la couche intérieure (IS) en polycarbonate soit durcie sensiblement de l'intérieur à l'extérieur d'une manière progressive et qu'il soit ainsi produit et gelé en son sein aussi peu de tensions que possible.

2. Procédé suivant la revendication 1,
caractérisé
en ce que la couche (AS) extérieure est en un matériau à base de polyoléfine.

3. Procédé suivant la revendication 2,
caractérisé
en ce que la couche extérieure (AS) est en polypropylène.

4. Procédé suivant la revendication 2,
caractérisé
en ce que la couche extérieure (AS) est en polyéthylène.

5. Elément de transmission optique suivant la revendication 4,
caractérisé par le fait
que la couche extérieure (AS) est en un polyéthylène linéaire basse densité, c'est-à-dire un LLDPE.

6. Procédé suivant la revendication 4,
caractérisé par le fait
que la couche extérieure (AS) est en un polyéthylène linéaire moyenne densité, c'est-à-dire en LMDPE.

7. Procédé suivant l'une des revendications précédentes,
caractérisé par le fait que
les épaisseurs de paroi des deux couches (AS, IS) de la gaine de protection sont choisies approximativement dans le rapport 1:1.

8. Procédé suivant l'une des revendications précédentes,
caractérisé par le fait
que la couche extérieure (AS) est en un matériau à base de polyoléfine à haut poids moléculaire, ayant notamment un poids moléculaire compris entre 60000 et 150000.

9. Procédé suivant l'une des revendications précédentes,
caractérisé par le fait
que la cristallisation de la couche extérieure (AS) est comprise entre 70 % et 90 %.
